# EUROPEAN PATENT SPECIFICATION

(11) **EP 3 513 658 B1**
(45) Date of publication and mention of the grant of the patent: **28.10.2020**
(21) Application number: 18152197.2
(22) Date of filing: 17.01.2018
(51) Int. Cl.: A23G 7/00, A23G 1/00, A23G 1/18, A23G 1/20

(54) **PROCESS AND LINE FOR THE PRODUCTION OF CHOCOLATE ARTICLES**
VERFAHREN UND ANLAGE ZUR HERSTELLUNG VON SCHOKOLADEARTIKELN
PROCÉDÉ ET LIGNE DE PRODUCTION D'ARTICLES EN CHOCOLAT

(43) Date of publication of application: 24.07.2019
(73) Proprietor: Aasted ApS, 3520 Farum (DK)
(72) Inventor: Holmud, Dennis, DK-2860 Søborg (DK)
(74) Representative: Heiden, Finn

(56) References cited:
- EP-A1- 2 740 367
- EP-A2- 2 210 500
- EP-A2- 3 085 241
- GB-A- 2 186 476
- US-A- 5 275 835

## Description

The present invention concerns a process as process for the production of chocolate articles by continuous tempering of cocoa butter-containing chocolate mass and forming it, by which heated chocolate mass with crystal-free cocoa-butter is pumped as a complete stream through a cooling stage and further through a crystallization stage, that when entering the cooling stage the chocolate mass is divided into a row of several parallel, plate-like streams of mass, which are simultaneously cooled by a row of intermediary, plate-like streams of cooling water until the mass is being collected again to a complete stream.

The invention also relates to a chocolate articles production line for continuous production comprising a heated storage tank with a supply of heated cocoa butter-containing chocolate mass connected via a pump to a plate heat exchanger, which is further connected to a crystallization unit.

The inventive process and production line relates to the treatment of chocolate mass having a content of genuine cocoa butter such as widely applied milk or dark chocolate mass comprising genuine cocoa butter typically in a content of up to approximately 35%. The today's widely applied chocolate mass encompass all types of suspensions of non-fat particles such as sugar, milk powders and cocoa solids mixed up with the liquid cocoa butter fat constituent. Important is that the suspensions allow crystallization of the cocoa butter when the mass is being tempered.

Mass made of up to 100% cocoa butter or cocoa liquer can also be continuously tempered with the inventive process as these masses also crystallise finely in the genuine cocoa butter.

Manufacturers of chocolate mass articles for the consumer market have always strived to achieve a high quality tempered mass and chocolate articles. The demand is that the content of genuine cocoa butter is crystallised into the stable βV-crystals dominantly in the ready chocolate articles. Any content of in-stable crystals left in the articles must be diminishing. Then, the manufacturer can rely on, that the quality of his chocolate products are consistent and as required by the consumers.

So, the fat phase comprising the genuine cocoa butter must be capable of crystallizing into the desirable βV-crystals. However, it is important to avoid instable crystals in the solidified mass. Only then, eatable chocolate articles with good taste, crisp break and shiny appearance are created. The solidified chocolate articles will also achieve the longest possible shelf life and the best resistance against bloom, as instable crystals are diminished. Just a slight content of in-stable crystals left in the mass will give rise to shorter shelf-life as the articles will bloom more quickly as when in-stable crystals are not present.

By the most widely used prior process for continuous tempering of chocolate mass heated chocolate mass with crystal-free cocoa-butter is pumped as a complete stream to a cooling stage, further on to a crystallization stage and finally through a reheating stage, where after it is being deposited as a highly liquid mass.

The reason for the highly liquid state of the tempered chocolate mass is the reheating stage. However, the heating stage is necessary as the preceding cooling and crystallization stages apply relatively cold cooling surfaces that creates an undesirable high content of in-stable crystals in the mass, which has to be re-melted before the mass can be made into acceptable consumer articles.

The prior tempering processes are dominantly performed in tempering columns comprising the cooling stage, the crystallization stage and the reheating stage arranged on top of each other. The columns are high, heavy and extensive.

Before the chocolate mass is supplied to perform the actual tempering process, it is heated to around 40-55°C in a premature step. All the crystals in the particular mass are melted out and dissolved in the mass before the mass is pumped continuously through the cooling stage of the column. The premature step is typically arranged distant to the tempering apparatus as the mass is heated in a storage tank. However, a premature heating step could also be arranged in the tempering column in front of the cooling stage, which then makes the column even higher.

The chamber surfaces of the cooling and crystallisation stages are kept "cold" with temperatures typically between 8-14 °C regulated by the temperature and flow of the water in the intermediary chambers. The low temperatures are necessary for the heat-exchange of the cooling and crystallisation stages of the column to be as effective as possible. Otherwise, the columns would be even higher for a particular maximum capacity and mass type. However, the disadvantages of the "cold" surface temperatures in the cooling and crystallisation chambers are creation of in-stable crystals simultaneously with the creation of the stable crystals. This phenomenon is especially extensive in the cooling stage.

In the reheating stage, the temperature of the mass is raised only slightly being sufficient for melting up again the in-stable crystals only. The desirable stable βV-crystals are preserved. A high and extensive reheating stage of the column is necessary when complete re-melting of the undesirable, instable crystals must be ensured.

However, due to the necessity of the re-heating stage the raised temperature of the chocolate mass makes it highly liquid having low viscosity.

The viscosity is typically around 10.000 centipoise for tempered chocolate mass supplied to an enrobing process and is around 20-25.000 cp for tempered chocolate mass deposited into moulds.

So, when tempering mass with high content of cocoa butter such as milk chocolate, white chocolate or dark chocolate with the prior process and apparatus limits the following forming process thereof to handle the low viscosity state of the mass in a mould or by an enrobing process.

EP3085241A1 discloses an apparatus and s process of continuous tempering of cocoa butter-containing chocolate mass as the cooling stage is arranged in a plate heat exchanger and the crystallization stage in a traditional column. When entering the cooling stage the heated and crystal-free chocolate mass is divided into a row of several parallel, plate-like streams of mass, which are simultaneously cooled by a row of intermediary, plate-like streams of cooling water without creation of crystals until the mass is being collected again to a complete stream. Depending on the temperature at which crystals are created in the particular mass, the pre-set temperature to be obtained in the chocolate mass just before entering the crystallization stage is set to be slightly above the crystal-creation temperature for Beta V. When the mass is a certain recipe of milk chocolate having a crystal-creation temperature of 26,5°C, the temperature is set to 27°C. However, though undesirable, lower melting crystals mainly are avoided in the mass passing through the crystallization stage, the ready tempered mass is still highly liquid having low viscosity. Forming of the mass into articles must then be done by depositing the liquid mass into moulds having the shape of the articles. Finally, the articles have to be cooled when the mass solidifies in the moulds, which are carried through cooling equipment such as long cooling tunnels.

US5275835A discloses a process for preparing confectionery compositions containing reduced calorie cocoa butter substitute fats. The compositions are rapidly cooled to a temperature of less than 21,1°C simultaneously imparting shear in a first stage of a conventional swept-wall, scraped-wall or screw-type heat exchanger such as the widely applied chocolate tempering columns having several controllable steps. In a second step the cooled compositions are then conditioned for at least 5 minutes by warming it to a temperature of about 21,1°C to 29,4°C during agitation. The compositions are then poured into moulds subsequently being slowly cooled before demoulding the solidified articles from the moulds, or are deposited as a curtain enrobing confectionery centres on a grid. The compositions are then highly liquid and are as such not suitable for being extruded.

EP2210500A2 discloses a method for continuous tempering of a fat-containing, crystallisable chocolate mass, which has been heated so that it is liquid, pumpable and free from crystals. The mass is divided into a first stream of mass and a second stream of mass. The first stream of mass is cooled and crystallised. The second stream of mass is still essentially free from crystals. Thereafter, the two streams of mass are mixed together into a final crystallised stream of mass, ready for being poured into moulds or being deposited as an enrobing layer on articles. The mass is then not suitable for being extruded.

GB2186476A discloses a method of tempering chocolate mass in scraped surface heat exchangers by continuous agitation and cooling of the chocolate mass to a predetermined temperature. By monitoring the consistency of the chocolate mass the cooling of the mass is controlled accordingly so that the required consistency is obtained for the particular use. By monitoring the pressure difference across the heat exchanger using pressure transducers, the consistency is monitored and cooling amount is controlled accordingly. The cooling amount may also be controlled on basis of monitoring the motor used to effect mixing of the composition in the heat exchanger or by use of an in-line viscosimeter.

EP2740368A1 discloses a column for continuous tempering of chocolate mass having at least one closed, circular chamber with planetary moving mixers, which planetary mixers are adapted to provide intensive shear and homogenous mixing. The disclosure has focus on the improvement in tempering capacity as the planetary mixers accomplish a circular path in the chambers simultaneously being rotated in an orbital rotation around their own axis of rotation. It is suggested, that two planetary mixers in a chamber are sufficient tempering high-viscosity or heavy-duty mass, and that four mixers per chamber are more effective when tempering low viscosity mass such as highly liquid cocoa butter. However, the temperature and flow of the cooling water is controlled in well-known manner by circuits connected to inlets and outlets of the chambers so that the mass is cooled, crystallized and reheated or stabilized through the column heat-exchanging with the particular water circuits.

The inventive process is characterized in that the chocolate mass is cooled by passage through the cooling stage to a temperature which is below 26°C and above 23°C depending of the particular chocolate mass, and which temperature is below the Beta V-crystal-creation temperature for the particular mass,
that the chocolate mass is subjected to intensive homogenous mixing and shear passing through the crystallization stage as planetary mixers accomplish a circular path in the chambers simultaneously being rotated in an orbital rotation around their own axis of rotation,
that the chocolate mass is cooled simultaneously in the crystallization stage by cooling water temperatures between 20°C and 25°C maintaining the chocolate mass temperature essentially constant within a few tenth of a degree Celcius, that the chocolate mass is subjected to the planetary mixers for a time period of between 100 and 250 seconds being sufficient to remove the latent heat produced as the Beta V crystals are created, and that the tempered chocolate mass is finally extruded.

When chocolate mass is cooled by passage through the cooling stage as when being divided into a row of several parallel, plate-like streams of mass, which are simultaneously cooled by a row of intermediary, plate-like streams of cooling water until the mass is being collected again to a complete stream to a temperature which is above 23°C and below 26°C depending of the particular chocolate mass, and which temperature is below the Beta V-crystal-creation temperature for the particular mass, it became a major surprise that the chocolate mass is still highly liquid and free from any crystallisation in the cocoa butter. The viscosity is 10.000 cp to 25.000 cp and proper testing reveals that neither α, BetalV nor BetaV crystals are present in the mass. When passing the chocolate mass further through the intensive mixing and shear of the crystallisation stage the crystals created simply transfers directly into the desirable Beta V -crystals only when maintaining the chocolate mass temperature essentially constant and the cooling water temperature between 20°C and 25°C just sufficiently to remove the latent heat released when the crystals are created for a time period of between 100 and 250 seconds being sufficient to remove the latent heat produced as the Beta V crystals are created. The result is astonishingly a tempered chocolate mass having a crystal content of purely desirable Beta V-crystals and yet a being highly viscous having a viscosity in the range of 50.000 cp - 100.000 cp. The mass can then be extruded directly after tempering through extruder devices. As the chocolate mass is so close to be finally solidified when extruded the long, expensive and energy requiring cooling tunnels are avoided.
There is no reheating process or chamber needed before the mass is extruded - it is done immediately after the crystallisation stage.
As a further benefit the cocoa butter content of the mass can be reduced severely, typically with a third, as the characteristics of the cocoa butter enhancing flowability of the mass is not pertinent any longer when the tempered mass shall not be deposited any longer but instead extruded into shape.

With the inventive solution a first problem solved is to provide a tempered high quality chocolate mass which can be extruded. Another problem is to provide a process which is energy saving and avoids long cooling tunnels. A further problem is to reduce the expensive content of cocoa butter without loosing the quality feeling of the ready article. A further problem is to simplify and minimize the process as the crystallisation device is followed directly by a extruding device without any intermediary reheating stage or device.

When the temperature of the cooling water entering the cooling stage is a few tenth of a degree up to 2,0°C colder than the temperature of the chocolate mass leaving the cooling stage as the water temperature is above 19 and below 25°C and the direction of flow of the row of plate-like streams of mass are the opposite of the direction of flow of the row of intermediary, plate-like streams of cooling water the process is well-controlled and especially energy-saving.

The extruded chocolate mass is simply cut directly into pieces of articles by means of a knife device or string and transported on a simple conveyor wed instead of expensive moulds and gear for that.

Especially is it provide more shape to the chocolate mass by extruded pieces of chocolate mass is further shaped by plungers stamping on the articles immediately after being extruded and cut.

The extruded chocolate mass is cut into major pieces such as tablets or bricks with a weight up to 50 kg when required. The long time solidifying of highly liquid mass as by the prior depositing is avoided.

The inventive solution of a chocolate articles production line for continuous production is comprising a heated storage tank with a supply of heated cocoa butter-containing chocolate mass connected via a pump to a plate heat exchanger, which is further connected to a crystallization unit and to an extruder device.

Connecting a plate heat exchanger with a crystallization unit have planetary moving mixers in a closed circular chamber, which planetary mixers are adapted to provide intensive shear and homogenous mixing, which planetary mixers accomplish a circular path in the chambers simultaneously being rotated in an orbital rotation around its own axis of rotation it became a great surprise that the combined units could be controlled to such extent that the tempered chocolate mass could be crystallised to such extent that the mass was not highly liquid any longer but instead highly viscous. A further connecting to an extruder device with at least one orifice through which the continuously tempered chocolate mass would be extruded as an extrudate highly acceptable for further cutting and treatment is then what the manufacturers of chocolate articles have wanted for many years but never seen before.

The plate heat exchanger is advantageously of the type disclosed in EP3085241A1 having at least one row of parallel plates arranged in a stack sealed at their edges providing intermediary, neighbouring channels each having an inlet and an outlet, that every second channel in the row is connected with a common first inlet and a common first outlet for the flow of mass there through, and that each of the intermittent, neighbouring channels are connected with a common second inlet and a common second outlet for the flow of water medium there through.

In the common first inlet the mass is being split into several streams when entering each second channel in the row. The mass is then flowing in a row of parallel streams through the heat exchanger, simultaneously being tempered by intermittent, neighboring channels each with water medium flowing there through.

The mass channels of the plate heat exchanger are free from any intermediary scrapers, discs or wings moving through the chambers such as by the cooling stages of the prior columns. The channels are slim in comparison to the extension of the plates. The row of the many parallel channels ensure that the mass is split into several "plate-like" streams, each of them all being exposed to accurately the same tempering conditions exercised by each of the intermittent, neighboring water channels.

The plates of the row of parallel plates can have several forms such as being planar or corrugated as long as the mass is flowing in a row of parallel streams through the cooling stage heat exchanger, simultaneously being tempered by intermittent, neighboring channels each with water medium flowing there through.

When the channels or streams of mass have a width of 1-10 mm, the mass flow through the channels simultaneously as a row of parallel plates or sheets. Most preferably, the channels or the streams have a width of 2-5 mm, so that the mass flow through the channels as thick, separated pages in a big book. When the channels or the streams have a width of 1-2 mm the mass flow as film-like sheets or as pages in a big book.

The cooled mass is completely homogenous and uniform in constitution and temperature when leaving the common first outlet. The temperature of the mass leaving the common first outlet is then controlled sharply within tenths of a degree. Consequently, the particular mass can be controlled exactly to a temperature which is below 26°C and above 23°C depending of the particular chocolate mass, and which temperature is below the Beta V-crystal-creation temperature for the particular mass as required by the inventive process.
No crystals are made in the mass in the cooling stage, and when the mass enters the crystallization unit, very little cooling is necessary for the creation of the crystals. With other words, the mass is cooled in the plate heat exchanger without the creation of any crystals, which then is ignited when the mass enters the crystallization unit. When no crystals are made in the inventive cooling stage - neither the desirable βV-crystals for chocolate mass, nor any lower melting crystals, such as the βIV-crystals, then is the process extremely well-controlled. Consequently are any reheating for removing undesirable crystals superflous.

Decisive is also, that no shear is provided to the mass in the cooling stage such as being done by the cooling stage stirring elements of the prior art processes. The thin rows of plate-like streams in the cooling process provides for a complete homogenous heat exchange of all mass parts trough the cooling stage so that all the mass is in a "sharp" and homogeneous energy balance maintaining that no crystals are created - neither in-stable crystals nor the desirable, stable BetaV crystals. The applied "sur-plus" cooling energy is so to say accumulated and ready to be released directly as crystallization of the BetaV crystals when shear is applied. So, when all the mass streams are cooled and collected in a complete stream only appliance of shear is necessary for the desirable BetaV crystals to be created in the mass. The temperature of the mass is advantageously kept constant passing through the crystallization stage. The effect applies for all mass recipes having a content of cocoa butter which is able to crystallize into BetaV crystals. It is observed that the mass crystallizes directly into the BetaV crystals only - no other crystal-types are created. Consequently, the reheating stage of the process and columns is avoided and can be omitted.
The process is then highly quality ensuring for the tempered mass and the final articles. It is also reducing the energy consumption for the complete process considerably.

The crystallisation unit could be as a single one of the chambers revealed from the column described in EP2740368A1 having planetary moving mixers in a closed circular chamber, which planetary mixers are adapted to provide intensive shear and homogenous mixing, which planetary mixers accomplish a circular path in the chambers simultaneously being rotated in an orbital rotation around its own axis of rotation. The chocolate mass temperature is kept essentially constant within a few tenth of a degree Celcius, as the chocolate mass is subjected to the planetary mixers for a time period of between 100 and 250 seconds being sufficient to remove the latent heat produced as the Beta V crystals are created. The tempered mass is highly viscous in the range of 50.000-100.000 cp being perfect for passing through the following extruder device.

The extruder device is advantageously of the well-known types from the bakery field such as having an open hopper into which the tempered mass is poured directly. However, a great diversity of extruders can be applied without limiting the inventive production line solution.

A transporting web is actually the only device to apply after the extruder as all other gear such as cooling tunnels is superfluous saving the manufacturers a lot of expenses.

When a cutting device is arranged at the extruder for cutting the extruded mass into pieces of articles it is expedient to shape the articles further such as with plungers arranged after the cutting device for forming the articles by stamping them into shape directly at the transportation web. For the first time this is possible with tempered chocolate mass without the appliance of moulds and plungers fitting therewith.

The invention also relates to the inventive use of apparatus comprising a heated storage tank connected to a plate heat exchanger via a pump further connected with a crystallization stage having planetary moving mixers and being further connected to an extruder device for extruding tempered chocolate mass. The inventive use is especially advantageous when chocolate mass is extruded and cut into pieces as drops or lumps or chips or the like spots on an underlying continuously driven steel or plastic web.
When the inventive use encompass tempering of chocolate raw mass such as cocoa liquor or cocoa butter to be extruded in major profiles and cut for making chocolate tablets or bricks with a weight up to 50 kg solidification time is minimized and quality is raised. Problematic remains of in-stable crystals in the center of solidified blocks as found by traditionally used equipment depositing the tempered mass in such large amounts in moulds are not present any longer with the inventive use.

The invention is explained further below under reference to preferred embodiments as well as the drawing, in which
fig. 1 is a schematic view of the inventive chocolate articles production line performing the inventive process, seen in perspective,
fig. 2 is the tempering apparatus of the production line from figure 1,
fig. 3 is a perspective view of a heat exchanger comprising the cooling stage of the apparatus of figures 1 and 2,
fig. 4 is schematically disclosed part of the extruder of figure 1 as well as a further knife device,
fig. 5 is a schematically the pattern of movement of the planetary mixers of the crystallisation unit,
fig. 6 is a further inventive chocolate articles production line performing the inventive process of extruding major bricks, seen in perspective,
fig. 7 is a extruder for producing tablets with the inventive process,
fig. 8 is a schematic view of two inventive productions lines as from figures 1 arranged for supplying two different mass types to a double extruder,

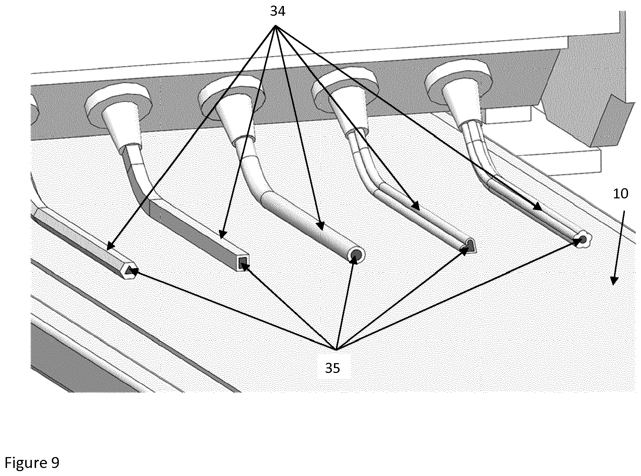

fig. 9 the extruder of figure 8 and the extrudates having a core and mantel of different chocolate types,
fig. 10 a knife device and stamping device, and
fig. 11 the stamping device of figure 10, seen from below.

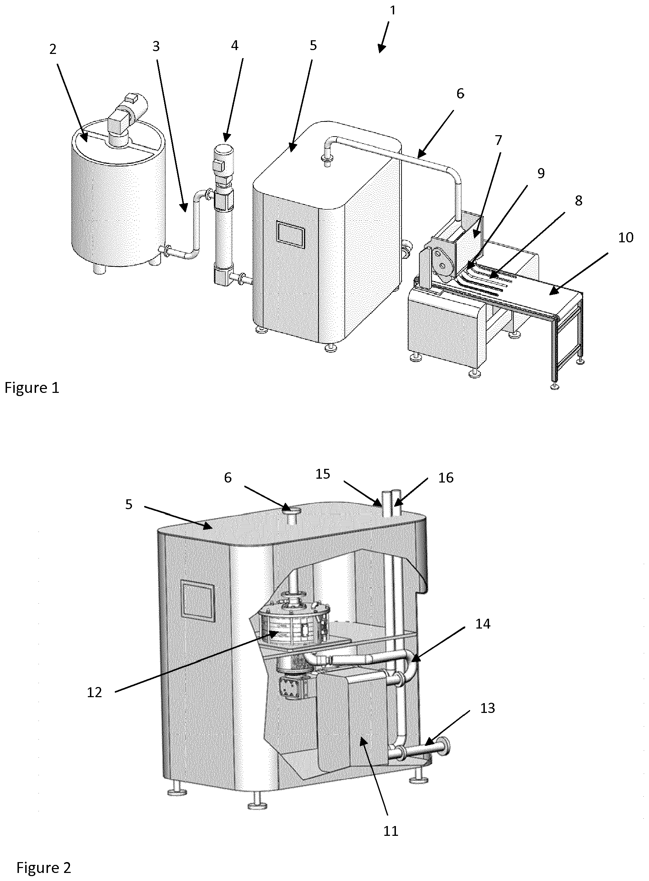

The chocolate articles production line 1 for continuous production disclosed in figure 1 has a heated storage tank 2 with a supply of heated cocoa butter-containing chocolate mass connected via a tube 3 with a pump 4 to a tempering apparatus 5. The tempering apparatus 5 is via a tube 6 leading the tempered mass to an extruder 7. The extruded mass 8 leaves the extruder 7 via orifices 9 and onto a transportation web 10.

As disclosed in figure 2 is inside the tempering apparatus 5 a plate heat exchanger 11, which is further connected to a crystallization unit 12. The heated mass from the tank is supplied by the pump 4 and via the mass inlet 13 to the plate heat exchanger 11 and further on to the crystallisation unit 12 via the tube 14. The cooling water inters via the tube 15 and leaves the plate exchanger via the tube 16 as disclosed in figure 2.

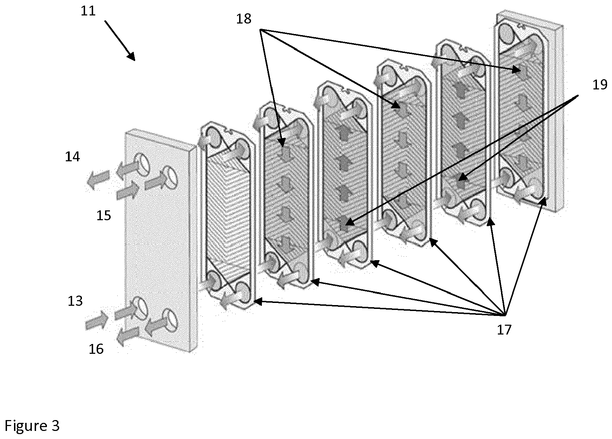

The plate heat exchanger is built up of many plates 17 of which only a few is schematically disclosed in figure 3. With the arrows 18 is depicted the flow of the cooling water between the plates 17. With the arrows 19 is depicted the flow of chocolate mass in the neighboring gaps between the plates. The plate heat exchanger is of a common type available for foodstuff production and is therefore not further explained.

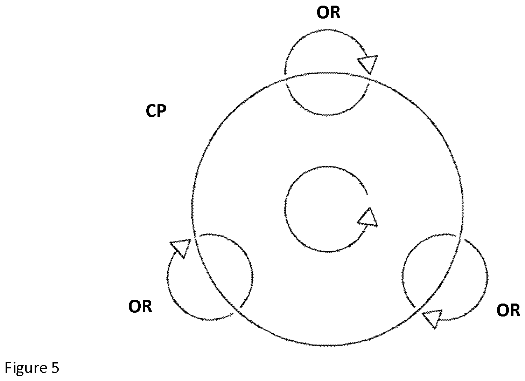

The crystallization unit 12 have planetary moving mixers in a closed circular chamber, which planetary mixers are adapted to provide intensive shear and homogenous mixing. The planetary mixers accomplish a circular path CP in the chamber simultaneously being rotated in an orbital rotation OR around its own axis of rotation as schematically disclosed in figure 5. The crystallisation unit corresponds to one circular chamber with planetary mixers as described in EP2740368A1 and is therefore not described further here. Important is that in case of the need of further circular chambers they are both controlled according to the inventive process as crystallisation stage when for example being cooled by the same cooling circuit so that any precooling or reheating is excluded by such chambers.

The chocolate mass is heated to 40-55°C in the tank 2 and supplied continuously to the plate heat exchanger 11 via the tube 13. The chocolate mass is cooled by passage through the cooling stage to a temperature which is below 26°C and above 23°C depending of the particular chocolate mass as the temperature is below the Beta V-crystal-creation temperature for the particular mass.
The chocolate mass is being divided into a row of several parallel, plate-like streams 19 of mass, which are simultaneously cooled by a row of intermediary, plate-like streams 18 of cooling water until the mass is being collected again to a complete stream 14 to a temperature which is above 23°C and below 26°C depending of the particular chocolate mass, and which temperature is below the Beta V-crystal-creation temperature for the particular mass. The chocolate mass is still highly liquid and free from any crystallisation in the cocoa butter. The viscosity is 10.000 cp to 25.000 cp and proper testing reveals, that neither α, BetalV nor BetaV crystals are present in the mass.

When the temperature of the cooling water entering the cooling stage is a few tenth of a degree up to 2,0°C colder than the temperature of the chocolate mass leaving the cooling stage as the water temperature is above 19 and below 25°C and the direction of flow of the row of plate-like streams of mass are the opposite of the direction of flow of the row of intermediary, plate-like streams of cooling water the process is well-controlled and especially energy-saving.

The chocolate mass is then subjected to intensive homogenous mixing and shear passing through the crystallization stage 12 as planetary mixers accomplish a circular path in the chambers simultaneously being rotated in an orbital rotation around their own axis of rotation. The chocolate mass is cooled simultaneously in the crystallization stage by cooling water temperatures between 20°C and 25°C maintaining the chocolate mass temperature essentially constant within a few tenth of a degree Celcius. The chocolate mass is subjected to the planetary mixers for a time period of between 100 and 250 seconds being sufficient to remove the latent heat produced as the Beta V crystals are created. The tempered chocolate mass is ready to be transferred via the tube 6 to the extruder 7. At figure 1 the extruder 7 has five orifices 9 so that five extrudates of chocolate mass is produced simultaneously.

When passing the chocolate mass further through the intensive mixing and shear of the crystallisation stage the crystals created simply transfers directly into the desirable Beta V -crystals when maintaining the chocolate mass temperature essentially constant and the cooling water temperature between 20°C and 25°C. This is just sufficient to remove the latent heat released when the Beta V crystals are created for a time period of between 100 and 250 seconds. The result is astonishingly a tempered chocolate mass having a crystal content of purely desirable Beta V-crystals and yet a being highly viscous having a viscosity in the range of 50.000 cp - 100.000 cp. The mass can then be extruded directly after tempering through extruder devices. As the chocolate mass is so close to be finally solidified when extruded the long, expensive and energy requiring cooling tunnels are avoided.
There is no reheating process or chamber needed before the mass is extruded - it is done immediately after the crystallisation stage on to a transportation web 10 or the like.

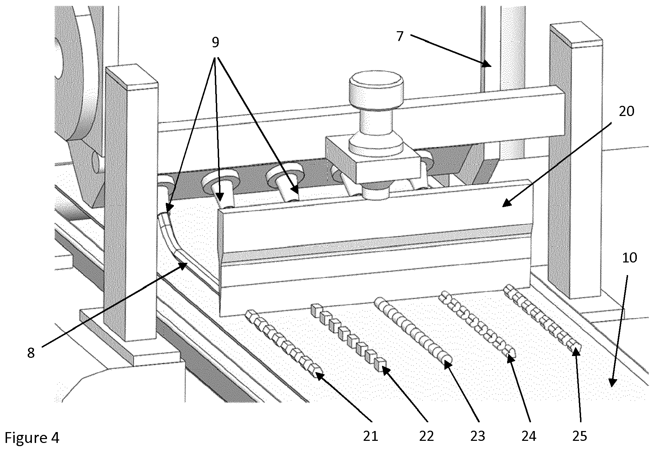

In figure 4 is disclosed a knive cutter 20 arranged at the transport web for cutting the extrudates 8 into articles. The ready cut articles are made in the same production of extrudates with different shapes of the openings 9 such as hexagonal articles 21, square articles 22, circular articles 23, heart-shaped articles 24 and round-edged shaped articles 25.

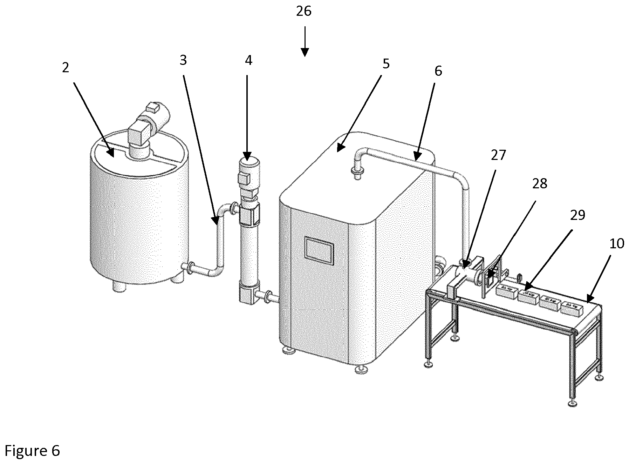

The inventive production line 26 disclosed in figure 6 consist of the same tempering apparatus 5 as in figure 1, however the open-hopper extruder 7 is replaced by a closed extruder 27 having at least one orifice 28 with a huge square dimension for extruding and cutting into 25 kilograms articles. Even much heavier articles can be extruded. The great advantage is that depositing of liquid tempered mass into moulds that have to solidify for a long period of many hours are avoided. Cooling equipment is avoided and the extruded articles have the desired quality all through of Beta V crystals only.

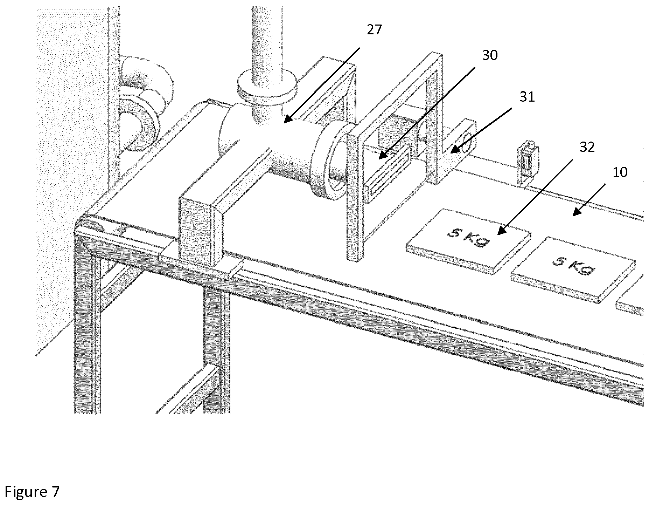

In figure 7 is disclosed the closed extruder 27 of figure 6 now being equipped with a slim rectangular orifice 30 for extruding tablets 32.

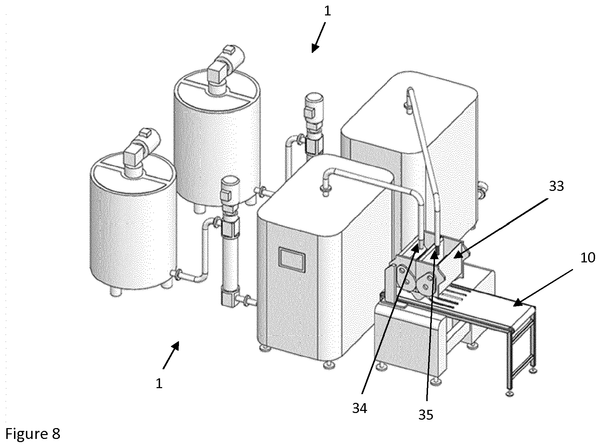

Two production lines 1 of figure 1 is disclosed in figure 8 supplying a twin-hopper extruder 33 with two different chocolate types 34, 35. The chocolate type 34 is extruded as the mantel 34 of the extrudates and the chocolate type 35 is extruded as the core of the extrudates carried by the transportation web 10.

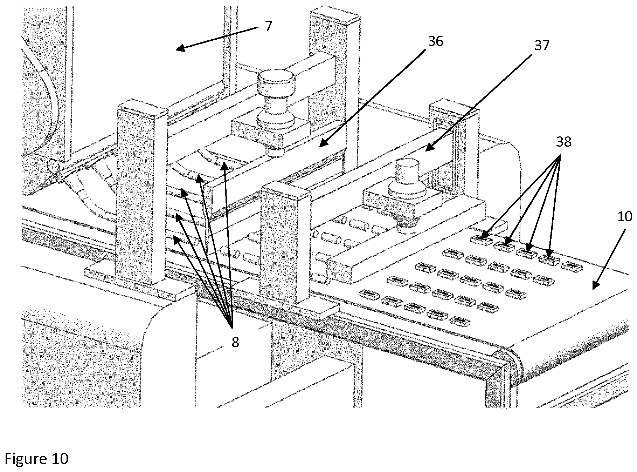

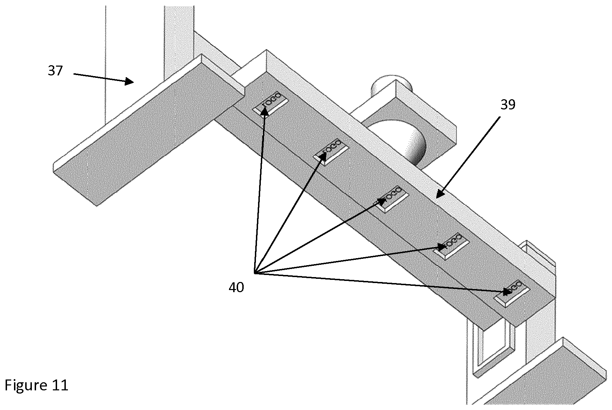

In figure 10 is disclosed a knife cutter 36 and a stamping device 37 arranged at the transportation web 10 of the production line of figure 1. In figure 11 is disclosed the stamping bar 39 which by a fast up-and down movement presses the pre-cutted extruded articles into the desired shape as ready articles 38 by the action of the engravements 40 in the bar 39.

## Claims

1. Process for the production of chocolate articles (21-25, 29, 32, 34, 35, 38) by continuous tempering of cocoa butter-containing chocolate mass and forming it, by which heated chocolate mass with crystal-free cocoa-butter is pumped as a complete stream through a cooling stage (11) and further through a crystallization stage (12),
that when entering the cooling stage (11) the chocolate mass is divided into a row of several parallel, plate-like streams of mass (19), which are simultaneously cooled by a row of intermediary, plate-like streams of cooling water (18) until the mass (19) is being collected again to a complete stream (14),
**characterized in,**
**that** the chocolate mass is cooled by passage through the cooling stage (11) to a temperature which is below 26°C and above 23°C depending of the particular chocolate mass, and which temperature is below the Beta V-crystal-creation temperature for the particular mass,
**that** the chocolate mass is subjected to intensive homogenous mixing and shear passing through the crystallization stage (12) as planetary mixers accomplish a circular path (CP) in the chambers simultaneously being rotated in an orbital rotation (OR) around their own axis of rotation,
**that** the chocolate mass is cooled simultaneously in the crystallization stage (12) by cooling water temperatures between 20°C and 25°C maintaining the chocolate mass temperature essentially constant within a few tenth of a degree Celcius, that the chocolate mass is subjected to the planetary mixers for a time period of between 100 and 250 seconds being sufficient to remove the latent heat produced as the Beta V crystals are created, and that the tempered chocolate mass is finally extruded (8).

2. Process according to claim 1, **characterized in, that** the temperature of the cooling water (15) entering the cooling stage (11) is a few tenth of a degree up to 2,0°C colder than the temperature of the chocolate mass (14) leaving the cooling stage (11) as the water temperature is above 19 and below 25°C.

3. Process according to one or more of the claims 1-2, **characterized in, that** the direction of flow of the row of plate-like streams of mass (19) are the opposite of the direction of flow of the row of intermediary, plate-like streams of cooling water (18).

4. Process according to one or more of the claims 1-3, **characterized in, that** the extruded chocolate mass (8) is cut into pieces of articles (21-25, 29, 32).

5. Process according to claim 4, **characterized in, that** the extruded pieces of chocolate mass is further shaped by plungers (37) stamping on the articles (38) immediately after being extruded (8) and cut (36).

6. Process according to claim 4, **characterized in, that** the extruded pieces of chocolate mass is enrobed with layers of confectionery mass such as chocolate mass.

7. Process according to one or more of claims 1- 5, **characterized in, that** the extruded pieces of chocolate mass is transferred directly to storage or wrapping without intermediary cooling stages.

8. Process according to one or more of claims 1 - 7, **characterized in that** the extruded chocolate mass is cut into major pieces such as tablets (32) or bricks (29) with a weight up to 50 kg.

9. Process according to one or more of the claims 1-8, **characterized in that** the chocolate mass is white chocolate, milk chocolate, dark chocolate, chocolate raw mass such as cocoa liquor or cocoa butter.

10. Chocolate articles production line (1, 26) for continuous production comprising a heated storage tank (2) with a supply of heated cocoa butter-containing chocolate mass connected via a pump (4) to a plate heat exchanger (11), which is further connected to a crystallization unit (12),
**characterized in,**
**that** the crystallization unit (12) have planetary moving mixers in a closed circular chamber, which planetary mixers are adapted to provide intensive shear and homogenous mixing, which planetary mixers accomplish a circular path (CP) in the chambers simultaneously being rotated in an orbital rotation (OR) around its own axis of rotation,
and **that** the crystallization unit (12) is further followed by an extruder device (7) with at least one orifice (9) through which the continuously tempered chocolate mass is extruded (8).

11. Chocolate articles production line (1, 26) according to claim 10, **characterized in, that** a transportation web (10) is arranged after the extruder (7) for carrying the extruded chocolate mass (8).

12. Chocolate articles production line (1, 26) according to claim 10 or 11, **characterized in, that** a cutting device (20) is arranged at the extruder (7) for cutting the extruded mass (8) into pieces of articles (21-25).

13. Chocolate articles production line (1) according to one or more of the claims 10-12, **characterized in, that** a device (37) carrying at least one plunger (39) is arranged after the cutting device (36) for forming the articles (38) by stamping them into shape directly at the transportation web (10).

14. Chocolate articles production line (1) according to one or more of the claims 10-13, **characterized in, that** the extruder (7) has an open hopper into which the ready tempered chocolate mass is immersed.

15. Use of apparatus (1, 26)) according to claim 10, comprising a heated storage tank (2) connected to a plate heat exchanger (11) via a pump (4) further connected with a crystallization stage (12) having planetary moving mixers and being further connected to an extruder device (7) for extruding tempered chocolate mass (8).

16. Use according to claim 15 for tempering of chocolate mass being extruded (8) and cut into pre-made articles (21-25, 29, 32).

17. Use according to claim 15 or 16 for tempering of chocolate mass to be extruded and cut into pieces as drops or lumps or chips or the like spots on an underlying continuously driven steel or plastic web.

18. Use according to one or more of the claims 15-17 for tempering of chocolate raw mass such as cocoa liquor or cocoa butter to be extruded in major profiles and cut for making chocolate tablets (32) or bricks (29) with a weight up to 50 kg.

19. Use according to one or more of the claims 15-18 for tempering of chocolate mass to be extruded and cut into pieces arranged on a transportation web and shaped by pressing or stamping plungers (39) acting directly on the web (10).

20. Use according to one or more of the claims 15-19 for tempering of chocolate mass to be extruded by two or more different chocolate masses, such as having a center of one type of chocolate mass and a surrounding layer of another type of chocolate mass (34), thereafter being cut into pieces (35).

21. Use according to one or more of the claims 15-20 for tempering of chocolate mass being extruded and cut into pre-made article centers which are thereafter continuously passing through an enrobing apparatus for providing a further layer of confectionery mass on the extruded article.

## Patentansprüche

1. Prozess zur Herstellung von Schokoladeartikeln (21-25, 29, 32, 34, 35, 38) durch kontinuierliches Tempern von Kakaobutter enthaltender Schokoladenmasse und durch ihr Formen, wodurch erwärmte Schokoladenmasse mit kristallfreier Kakaobutter als ein vollständiger Strom durch eine Kühlstufe (11) und weiter durch eine Kristallisationsstufe (12) gepumpt wird,
dass beim Eintreten in die Kühlstufe (11) die Schokoladenmasse in eine Zeile mehrerer paralleler plattenförmiger Masseströme (19) aufgeteilt wird, die durch eine Zeile von dazwischenliegenden plattenförmigen Kühlwasserströmen (18) gleichzeitig abgekühlt werden, bis die Masse (19) wieder zu einem vollständigen Strom (14) gesammelt wird,
**dadurch gekennzeichnet,**
**dass** die Schokoladenmasse durch einen Durchgang durch die Kühlstufe (11) auf eine Temperatur abgekühlt wird, die in Abhängigkeit von der bestimmten Schokoladenmasse unter 26°C und über 23°C liegt, und deren Temperatur unter der Beta-V-Kristallerzeugungstemperatur für die bestimmte Masse liegt,
**dass** die Schokoladenmasse beim Durchgehen durch die Kristallisationsstufe (12) einem intensiven homogenen Mischen und Scheren unterzogen wird, da Planetenmischer einen kreisförmigen Weg (CP) in den Kammern erzielen, die gleichzeitig in einer orbitalen Rotation (OR) um ihre eigene Rotationsachse gedreht werden,
**dass** die Schokoladenmasse in der Kristallisationsstufe (12) durch Kühlwassertemperaturen zwischen 20°C und 25°C gleichzeitig abgekühlt wird, welche die Schokoladenmassentemperatur innerhalb von ein paar Zehnteln eines Grads Celsius im Wesentlichen konstant halten, dass die Schokoladenmasse den Planetenmischern für eine Zeitspanne zwischen 100 und 250 Sekunden unterzogen wird, was ausreichend ist, um die latente Wärme zu entfernen, die erzeugt wird, wenn die Beta-V-Kristalle erzeugt werden, und dass die getemperte Schokoladenmasse schließlich extrudiert wird (8).

2. Prozess nach Anspruch 1, **gekennzeichnet dadurch, dass** die Temperatur des Kühlwassers (15), die in die Kühlstufe (11) eintritt, ein paar Zehntel eines Grads bis zu 2,0°C kälter ist als die Temperatur der Schokoladenmasse (14), welche die Kühlstufe (11) verlässt, da die Wassertemperatur über 19 und unter 25°C liegt.

3. Prozess nach einem oder mehreren der Ansprüche 1 bis 2, **gekennzeichnet dadurch, dass** die Strömungsrichtung der Zeile plattenförmiger Masseströme (19) der Strömungsrichtung der Zeile dazwischenliegender plattenförmiger Kühlwasserströme (18) entgegengesetzt ist.

4. Prozess nach einem oder mehreren der Ansprüche 1 bis 3, **gekennzeichnet dadurch, dass** die extrudierte Schokoladenmasse (8) in Artikelstücke (21-25, 29, 32) geschnitten wird.

5. Prozess nach Anspruch 4, **gekennzeichnet dadurch, dass** die extrudierten Stücke der Schokoladenmasse weiterhin durch Stempel (37) geformt werden, welche die Artikel (38) sofort nach Extrudieren (8) und Schneiden (36) formpressen.

6. Prozess nach Anspruch 4, **gekennzeichnet dadurch, dass** die extrudierten Stücke Schokoladenmasse mit Schichten von Konfektionsmasse, wie beispielsweise Schokoladenmasse, überzogen werden.

7. Prozess nach einem oder mehreren der Ansprüche 1 bis 5, **gekennzeichnet dadurch, dass** die extrudierten Stücke Schokoladenmasse ohne dazwischenliegende Kühlstufen unmittelbar zur Lagerung oder zum Verpacken transferiert werden.

8. Prozess nach einem oder mehreren der Ansprüche 1 bis 7, **dadurch gekennzeichnet, dass** die extrudierte Schokoladenmasse in größere Stücke geschnitten wird, wie beispielsweise Tafeln (32) oder Ziegel (29) mit einer Masse bis zu 50 kg.

9. Prozess nach einem oder mehreren der Ansprüche 1 bis 8, **dadurch gekennzeichnet, dass** die Schokoladenmasse weiße Schokolade, Milchschokolade, dunkle Schokolade, Schokoladenrohmasse, wie beispielsweise Kakaolikör oder Kakaobutter ist.

10. Schokoladeartikel-Herstellungsanlage (1, 26) zur kontinuierlichen Herstellung, einen erwärmten Vorratsbehälter (2) mit einer Zufuhr erwärmter Kakaobutter enthaltender Schokoladenmasse umfassend, der über eine Pumpe (4) mit einem Plattenwärmetauscher (11) verbunden ist, der weiterhin mit einer Kristallisationseinheit (12) verbunden ist,
**dadurch gekennzeichnet,**
**dass** die Kristallisationseinheit (12) Planetenbewegungsmischer in einer geschlossenen kreisförmigen Kammer aufweist, deren Planetenmischer eingerichtet sind, um intensive Scherung und homogenes Mischen bereitzustellen, deren Planetenmischer einen kreisförmigen Weg (CP) in den Kammern erzielen, die gleichzeitig in einer orbitalen Rotation (OR) um ihre eigene Drehachse gedreht werden,
und **dass** die Kristallisationseinheit (12) weiterhin von einer Extrudervorrichtung (7) mit mindestens einer Öffnung (9) gefolgt wird, durch welche die kontinuierlich getemperte Schokoladenmasse extrudiert wird (8).

11. Schokoladeartikel-Herstellungsanlage (1, 26) nach Anspruch 10, **gekennzeichnet dadurch, dass** ein Transportgewebe (10) nach dem Extruder (7) zum Tragen der extrudierten Schokoladenmasse (8) angeordnet ist.

12. Schokoladeartikel-Herstellungsanlage (1, 26) nach Anspruch 10 oder 11, **gekennzeichnet dadurch, dass** eine Schneidevorrichtung (20) an dem Extruder (7) zum Schneiden der extrudierten Masse (8) in Artikelstücke (21-25) angeordnet ist.

13. Schokoladeartikel-Herstellungsanlage (1) nach einem oder mehreren der Ansprüche 10 bis 12, **gekennzeichnet dadurch, dass** eine Vorrichtung (37), die mindestens einen Stempel (39) trägt, nach der Schneidevorrichtung (36) zum Formen der Artikel (38) angeordnet ist, indem sie unmittelbar an dem Transportgewebe (10) in Form gepresst werden.

14. Schokoladeartikel-Herstellungsanlage (1) nach einem oder mehreren der Ansprüche 10 bis 13, **gekennzeichnet dadurch, dass** der Extruder (7) einen offenen Füllschacht aufweist, in den die fertig getemperte Schokoladenmasse gesenkt wird.

15. Verwendung einer Vorrichtung (1, 26) nach Anspruch 10, die einen erwärmten Behälter (2) umfasst, der über eine Pumpe (4) mit einem Plattenwärmetauscher (11) verbunden ist, der weiterhin mit einer Kristallisationsstufe (12) verbunden ist, die Planetenbewegungsmischer aufweist und die weiterhin mit einer Extrudervorrichtung (7) zum Extrudieren getemperter Schokoladenmasse (8) verbunden ist.

16. Verwendung nach Anspruch 15 zum Tempern der Schokoladenmasse, die extrudiert (8) und in vorgefertigte Artikel (21-25, 29, 32) geschnitten wird.

17. Verwendung nach Anspruch 15 oder 16 zum Tempern der Schokoladenmasse, die extrudiert und als Flecken aus Tropfen oder Klumpen oder Chips oder dergleichen auf einem unterliegenden kontinuierlich angetriebenen Stahl- oder Kunststoffgewebe in Stücke geschnitten werden soll.

18. Verwendung nach einem oder mehreren der Ansprüche 15 bis 17 zum Tempern der Schokoladenrohmasse, wie beispielsweise Kakaolikör oder Kakaobutter, die in größere Profile extrudiert und zum Anfertigen von Schokoladetafeln (32) oder -ziegeln (29) mit einer Masse von bis zu 50 kg geschnitten werden soll.

19. Verwendung nach einem oder mehreren der Ansprüche 15 bis 18 zum Tempern der Schokoladenmasse, die extrudiert und in Stücke geschnitten werden soll, die auf einem Transportgewebe angeordnet werden und durch Press- oder Formpressstempel (39) geformt werden, die unmittelbar auf dem Gewebe (10) arbeiten.

20. Verwendung nach einem oder mehreren der Ansprüche 15 bis 19 zum Tempern der Schokoladenmasse, die durch mindestens zwei verschiedene Schokoladenmassen extrudiert werden soll, wie beispielsweise mit einer Mitte eines Typs Schokoladenmasse und mit einer umgebenden Schicht eines anderen Typs Schokoladenmasse (34), die danach in Stücke (35) geschnitten wird.

21. Verwendung nach einem oder mehreren der Ansprüche 15 bis 20 zum Tempern der Schokoladenmasse, die extrudiert und in vorgefertigte Artikelmitten geschnitten wird, die danach kontinuierlich durch eine Überziehvorrichtung zum Bereitstellen einer weiteren Schicht Konfektionsmasse auf dem extrudierten Gegenstand durchgeht.

## Revendications

1. Procédé de production d'articles en chocolat (21-25, 29, 32, 34, 35, 38) par le tempérage continu d'une masse de chocolat contenant du beurre de cacao et son façonnage, ce par quoi une masse de chocolat chauffée contenant du beurre de cacao exempt de cristaux est pompée sous forme d'un courant complet dans une étape de refroidissement (11) et en outre dans une étape de cristallisation (12), en ce que lors de l'entrée dans l'étape de refroidissement (11), la masse de chocolat est divisée en un rang de plusieurs courants de masse parallèles, de type plaque (19), qui sont refroidis simultanément par un rang de courants intermédiaires, de type plaque, d'eau de refroidissement (18), jusqu'à ce que la masse (19) soit récupérée de nouveau en un courant complet (14),
**caractérisé en ce que**
la masse de chocolat est refroidie par passage dans l'étape de refroidissement (11) jusqu'à une température qui est inférieure à 26°C et supérieure à 23°C en fonction de la masse de chocolat particulière, laquelle température étant inférieure à la température de création de cristaux Bêta V pour la masse particulière,
la masse de chocolat est soumise à un malaxage et un cisaillement homogènes intenses lors du passage dans l'étape de cristallisation (12) au fur et à mesure de la réalisation, par des malaxeurs planétaires, d'un cheminement circulaire (CP) dans les chambres étant simultanément en rotation selon une rotation orbitale (OR) autour de leur propre axe de rotation,
la masse de chocolat est refroidie simultanément dans l'étape de cristallisation (12) par des températures d'eau de refroidissement comprises entre 20°C et 25°C maintenant la température de la masse de chocolat essentiellement constante à plus ou moins quelques dixièmes de degrés Celsius, la masse de chocolat est soumise aux malaxeurs planétaires pendant une période de temps comprise entre 100 et 250 secondes étant suffisante pour éliminer la chaleur latente produite au fur et à mesure de la création des cristaux Bêta V, et la masse de chocolat tempérée est finalement extrudée (8).

2. Procédé selon la revendication 1, **caractérisé en ce que** la température de l'eau de refroidissement (15) entrant dans l'étape de refroidissement (11) est de quelques dixièmes de degré jusqu'à 2,0°C plus froide que la température de la masse de chocolat (14) sortant de l'étape de refroidissement (11), la température de l'eau étant supérieure à 19 et inférieure à 25°C.

3. Procédé selon l'une ou plusieurs parmi les revendications 1-2, **caractérisé en ce que** le sens de l'écoulement du rang de courants, de type plaque, de masse (19) est de sens opposé à celui de l'écoulement du rang de courants intermédiaires, de type plaque, de l'eau de refroidissement (18).

4. Procédé selon l'une ou plusieurs parmi les revendications 1-3, **caractérisé en ce que** la masse de chocolat extrudée (8) est découpée en morceaux d'articles (21-25, 29, 32) .

5. Procédé selon la revendication 4, **caractérisé en ce que** les morceaux extrudés de masse de chocolat sont en outre façonnés par des pistons (37) poinçonnant les articles (38) immédiatement après leur extrusion (8) et leur découpe (36).

6. Procédé selon la revendication 4, **caractérisé en ce que** les morceaux extrudés de masse de chocolat sont enrobés de couches de masse de confiserie telle qu'une masse de chocolat.

7. Procédé selon l'une ou plusieurs parmi les revendications 1-5, **caractérisé en ce que** les morceaux extrudés de masse de chocolat sont transférés directement vers le stockage ou l'emballage sans étapes de refroidissement intermédiaires.

8. Procédé selon l'une ou plusieurs parmi les revendications 1-7, **caractérisé en ce que** la masse de chocolat extrudée est découpée en grands morceaux tels que des tablettes (32) ou des briques (29) ayant un poids allant jusqu'à 50 kg.

9. Procédé selon l'une ou plusieurs parmi les revendications 1-8, **caractérisé en ce que** la masse de chocolat est constituée de chocolat blanc, de chocolat au lait, de chocolat noir, d'une masse brute de chocolat telle que de la liqueur de cacao ou du beurre de cacao.

10. Chaîne de production d'articles en chocolat (1, 26) pour une production continue, comprenant une cuve de stockage chauffée (2) ayant un apport en mase de chocolat chauffée contenant du beurre de cacao connectée via une pompe (4) à un échangeur thermique à plaques (11), qui est en outre connecté à une unité de cristallisation (12), **caractérisé en ce que**
l'unité de cristallisation (12) possède des malaxeurs à mouvement planétaire dans une chambre circulaire fermée, lesquels malaxeurs planétaires étant adaptés pour apporter un cisaillement intensif et un malaxage homogène, lesquels malaxeurs planétaires réalisent un cheminement circulaire (CP) dans les chambres étant simultanément en rotation selon une rotation orbitale (OR) autour de leur propre axe de rotation,
et l'unité de cristallisation (12) est en outre suivie par un dispositif d'extrusion (7) ayant au moins un orifice (9) à travers lequel la masse de chocolat tempérée en continu est extrudée (8).

11. Chaîne de production d'articles en chocolat (1, 26) selon la revendication 10, **caractérisée en ce qu'**un réseau de transport (10) est disposé après l'extrudeuse (7) afin de transporter la masse de chocolat extrudée (8) .

12. Chaîne de production d'articles en chocolat (1, 26) selon la revendication 10 ou 11, **caractérisée en ce qu'**un dispositif de découpe (20) est disposé au niveau de l'extrudeuse (7) afin de découper la masse extrudée (8) en morceaux d'articles (21-25).

13. Chaîne de production d'articles en chocolat (1) selon l'une ou plusieurs parmi les revendications 10-12, **caractérisée en ce qu'**un dispositif (37) portant au moins un piston (39) est disposé après le dispositif de découpe (36) afin de façonner les articles (38) en les poinçonnant en forme directement au niveau du réseau de transport (10).

14. Chaîne de production d'articles en chocolat (1) selon l'une ou plusieurs parmi les revendications 10-13, **caractérisée en ce que** l'extrudeuse (7) possède une trémie ouverte dans laquelle la messe de chocolat tempérée prête est immergée.

15. Utilisation d'un appareil (1, 26) selon la revendication 10, comprenant une cuve de stockage chauffée (2) connectée à un échangeur thermique à plaques (11) via une pompe (4) connectée en outre à une étape de cristallisation (12) ayant des malaxeurs à mouvement planétaire et étant en outre connectée à un dispositif d'extrusion (7) pour l'extrusion de la masse de chocolat tempérée (8).

16. Utilisation selon la revendication 15, pour le tempérage d'une masse de chocolat étant extrudée (8) et découpée en articles pré-faits (21-25, 29, 32).

17. Utilisation selon la revendication 15 ou 16, pour le tempérage d'une masse de chocolat devant être extrudée et découpée en morceaux tels que des perles ou des blocs ou des copeaux ou des points de ce type sur un réseau en plastique ou en acier sous-jacent et déplacé en continu.

18. Utilisation selon l'une ou plusieurs parmi les revendications 15-17, pour le tempérage d'une masse brute de chocolat telle que de la liqueur de cacao ou du beurre de cacao à extruder en grands profilés et découper pour la fabrication de tablettes (32) ou de briques (29) de chocolat ayant un poids allant jusqu'à 50 kg.

19. Utilisation selon l'une ou plusieurs parmi les revendications 15-18, pour le tempérage d'une masse de chocolat à extruder et découper en morceaux disposés sur un réseau de transport et façonnés par des pistons de pressage ou de poinçonnage (39) agissant directement sur le réseau (10).

20. Utilisation selon l'une ou plusieurs parmi les revendications 15-19, pour le tempérage d'une masse de chocolat à extruder par deux, ou plus, masses de chocolat différentes, tel qu'ayant un centre fait d'un type de masse de chocolat et une couche enveloppante d'un autre type de masse de chocolat (34), étant ensuite découpée en morceaux (35).

21. Utilisation selon l'une ou plusieurs parmi les revendications 15-20, pour le tempérage d'une masse de chocolat à extruder et découper en centres d'articles pré-faits que l'on fait ensuite passer en continu dans un appareil d'enrobage pour apporter une autre couche de masse de confiserie sur l'article extrudé.
